Europäisches Patentamt

European Patent Office

Office européen des brevets

(11) Veröffentlichungsnummer: **0 078 081**
**B1**

(12) **EUROPÄISCHE PATENTSCHRIFT**

(45) Veröffentlichungstag der Patentschrift:
29.08.84

(21) Anmeldenummer: 82201307.4

(22) Anmeldetag: 21.10.82

(51) Int. Cl.³: **H 04 N 5/93**, H 04 N 5/06

(54) Schaltungsanordnung zur Erzeugung der Vertikal-Synchronisierinformation in einem Video-Magnetbandgerät.

(30) Priorität: 24.10.81 DE 3142272

(43) Veröffentlichungstag der Anmeldung:
04.05.83 Patentblatt 83/18

(45) Bekanntmachung des Hinweises auf die Patenterteilung:
29.08.84 Patentblatt 84/35

(84) Benannte Vertragsstaaten:
AT DE FR GB

(56) Entgegenhaltungen:
DE - B - 1 202 316
DE - B - 1 914 008
DE - B - 1 923 111
US - A - 4 203 138

(73) Patentinhaber: Philips Patentverwaltung GmbH,
Billstrasse 80, D-2000 Hamburg 28 (DE)
(84) Benannte Vertragsstaaten: DE

(73) Patentinhaber: N.V. Philips' Gloeilampenfabrieken,
Groenewoudseweg 1, NL-5621 BA Eindhoven (NL)
(84) Benannte Vertragsstaaten: FR GB AT

(72) Erfinder: Kröner, Klaus, Immenhorstweg 94,
D-2000 Hamburg 65 (DE)

(74) Vertreter: Poddig, Dieter et al, Philips Patentverwaltung
GmbH Billstrasse 80 Postfach 10 51 49,
D-2000 Hamburg 28 (DE)

BUNDESDRUCKEREI BERLIN

## Beschreibung

Die Erfindung betrifft eine Schaltung zum Erzeugen der Vertikal-Synchronisierinformation in einem Video-Magnetbandgerät, bei dem das Magnetband einen rotierenden Kopfträger mindestens teilweise umschlingt und der Kopfträger einen oder mehrere gleichmäßig auf dem Umfang des Kopfträgers verteilte Magnetköpfe aufweist, die auf dem Magnetband nacheinander benachbarte, schräg zur Richtung des Magnetbandes verlaufende Spuren beschreiben bzw. abtasten, die jeweils die Information eines Halbbildes und in einem vorgegebenen geringen Abstand vom Rand des Magnetbandes die Vertikal-Synchronisierinformation enthalten, wobei ein mit der Bewegung des Kopfträgers synchronisiertes, den Spurwechsel angebendes Spurwechselsignal erzeugt wird und ferner ein von Horizontal-Synchronisierimpulsen der Bildinformation synchronisierter Zeilentaktgenerator zur Erzeugung eines Zeilentaktsignals vorgesehen ist.

Derartige Video-Magnetbandgeräte sind allgemein gebräuchlich und beispielsweise in »Heimvideotechnik (Sonderheft der Funkschau«, Franzis-Verlag 1979 auf den Seiten 5 bis 10 beschrieben. Da die Spuren nicht nur die Bildinformation, sondern auch die vollständige Synchronisierinformation enthalten, stellt bei Wiedergabebetrieb das von den Spuren abgelesene und in der Bildsignal-Verarbeitungsanordnung demodulierte Signal das vollständige FBAS-Signal dar, das einem Fernsehgerät zur Darstellung der Bildinformation zugeführt wird.

In der Praxis ist es nun möglich, daß der Rand des Magnetbandes zumindest stellenweise beschädigt oder gedehnt ist, wodurch wellige Ränder oder parallel zur Magnetbandkante abgeknickte Streifen entstehen, was durch Fabrikationsfehler bei der Herstellung des Magnetbandes oder bei Benutzung des Magnetbandes in einem nicht einwandfreien Gerät entstehen kann. Dadurch können an diesen beschädigten Stellen keine Vertikal-Synchronisierinfomrationen vom Band abgetastet werden, so daß das auf dem Fernsehgerät wiedergegebene Bild nicht synchronisiert ist und normalerweise »durchläuft«.

Aufgabe der Erfindung ist es, bei der Wiedergabe des vom Magnetband abgetasteten Bildsignals auf einem Fernsehgerät ein stehendes Bild auch dann zu erzeugen, wenn vom Band keine Vertikal-Synchronisierinformation abgetastet wird.

Diese Aufgabe wird erfindungsgemäß dadurch gelöst, daß eine Verzögerungsanordnung aus dem verzögerten Spurwechselsignal ein Startsignal erzeugt, das einen Vertikal-Synchronisier-Generator zur Erzeugung der Vertikal-Synchronisierinformation für die Bildsignal-Verarbeitung aus dem Zeilentaktsignal startet, und daß ein Phasenvergleicher die Verzögerungszeit der Verzögerungseinrichtung so steuert, daß das Startsignal mit einem vorgegebenen Phasenbereich eines der Zeilentakte zusammenfällt, der zwischen dem in dem Vertikal-Synchronisier-Generator aktiven Bereich des Zeilentaktsignals liegt. Das vollständige, dem Vernsehgerät zugeführte FBAS-Signal wird also nicht nur im Störungsfall, sondern auch im Normalbetrieb grundsätzlich sowohl aus der vom Band abgetasteten Information als auch aus der von der zusätzlichen Schaltungsanordnung erzeugten Vertikal-Synchronisierinformation zusammengesetzt. Um Störungen zu vermeiden, wenn im Normalfall vom Magnetband auch die Vertikal-Synchronisierinformation abgelesen wird, wird die vom Band gelesene Information nach jedem Spurwechsel mindestens während der Zeitdauer der erzeugten Vertikal-Synchronisierinformtaion gesperrt und die nach dem Sperren von der Spur abgetastete Vertikal-Synchronisierinformation beispielsweise durch Differenzieren in Signale umgewandelt, die der Horizontal-Synchronisierinformation entsprechen. Dadurch kann insbesondere nach einem Phasensprung beim Spurwechsel die Synchronisierung des Fernsehgerätes auf die Phase der von der Spur abgetasteten Horizontal-Synchronisierinformation zum frühest möglichen Zeitpunkt beginnen.

Da für die Stelle der Spur, an der die Vertikal-Synchronisierinformation nach der Bandkante bzw. nach dem Spurwechselsignal enthalten ist, eine Verschiebung von mehreren Zeilen gegenüber einem Nennwert zugelassen ist, die aber während vieler aufeinanderfolgender Spuren konstant ist, während die erfindungsgemäß erzeugte Vertikal-Synchronisierinformation stets eine bestimmte Zeit nach dem Spurwechsel beginnt, kann sich durch die so erzeugte Vertikal-Synchronisierinformation eine Höhenverschiebung von einigen Zeilen des wiedergegebenen Bildes ergeben. Diese Höhenverschiebung ist aber konstant und somit praktisch nicht bemerkbar, zudem noch am Bildrand allgemein keine wesentliche Information enthalten ist. Andererseits entsteht dadurch, daß die Vertikal-Synchronisierinformation zu dem von den Magnetköpfen abgetasteten Signal grundsätzlich zugesetzt wird bzw. den Anfang der Spurinformation grundsätzlich ersetzt, beim Ausbleiben der vom Magnetband abgetasteten Vertikal-Synchronisierinformation kein vertikaler Phasensprung durch einen Übergang auf die vom Spurwechselsignal abgeleitete Vertikal-Synhronisierinformation.

Beim Wechsel der Abtastung von einer Spur auf die andere ist ein Phasensprung von maximal einer viertel Zeilendauer in beiden Richtungen zugelassen. Durch die Regelung der Verzögerung derart, daß das Startsignal zwischen zwei für die Erzeugung der Vertikal-Synchronisierinformation aktiven Bereichen des Zeilentaktsignals liegt, wird erreicht, daß die erzeugte Vertikal-Synchronisierinformation immer die gleiche Anzahl Zeilen nach dem Beginn der Abtastung einer neuen Spur beginnt, so daß auch ein Springen des wiedergegebenen Bildes um eine Zeile bzw. eine Halbzeile bei Verwendung eines Zeilentaktsignals mit doppelter Zeilenfrequenz sicher vermieden wird.

Eine einfache Steuerung der Verzögerung des Spurwechselsignals zur Erzeugung des Startsignals wird dadurch erreicht, daß die Verzögerungsanordnung einen Lade- und Entladestromgenerator mit vom Phasenvergleicher gesteuerten Stromwert und einen daran über einen vom Spurwechselsignal gesteuerten Umschalter angeschlossenen Kondensator enthält, der mit dem Eingang eines Schwellwertschalters mit fester Schwelle verbunden ist, der das Startsignal erzeugt. Dies gestattet eine genaue Einstellung der Verzögerungszeit mit einfachen Mitteln.

Für eine einfache Steuerung des Vertikal-Synchronisier-Generators und auch des Phasenvergleichers ist es zweckmäßig, wenn das Startsignal ein kurzer Impuls ist. Ein solcher kurzer Impuls kann mit der vorstehend angegebenen Verzögerungsanordnung zweckmäßig dadurch erzeugt werden, daß der Schwellwertschalter zwei Schwellwerte aufweist und ein Ausgangssignal mit einem ersten Wert abgibt, wenn die Spannung am Kondensator den ersten Schwellwert überschreitet, und ein Ausgangssignal mit einem zweiten Wert abgibt, wenn die Spannung am Kondensator den ersten Schwellwert noch nicht oder den zweiten Schwellwert überschritten hat, wobei die Schwellwerte so gewählt sind, daß die Dauer des Ausgangssignals mit dem ersten Wert, das das Startsignal darstellt, kleiner als die Dauer eines Zeilentaktes ist. Diese zwei unterschiedlichen Schwellwerte können mit zwei Komparatoren verarbeitet werden, von denen der Komparator für die untere Schwelle den Komparator für die obere Schwelle einschaltet.

Eine weitere Ausgestaltung der Erfindung ist dadurch gekennzeichnet, daß der Phasenvergleicher die Phasen des erzeugten Startsignals und des Zeilentaktsignals vergleicht.

Für Phasenvergleicher sind verschiedene Schaltungen bekannt. Im vorliegenden Fall muß allerdings das Startsignal, das nur während eines sehr kleinen Bruchteils jeweils eines Halbbildes einmal auftritt, mit einem periodisch auftretenden Signal verglichen werden. Dies wird nach einer weiteren Ausgestaltung der Erfindung zweckmäßig dadurch erreicht, daß der Phasenvergleicher zwei schaltbare Stromquellen mit zueinander entgegengesetzter Polarität enthält, die während der Dauer des Startsignals eingeschaltet sind, daß ein weiterer Kondensator über einen weiteren Umschalter wahlweise mit der Stromquelle der einen oder der anderen Polarität verbunden ist, daß das Zeilentaktsignal den weiteren Kondensator die Verzögerungszeit der Verzögerungsanordnung steuert. Der Kondensator hat dabei zweckmäßig eine so große Kapazität, daß während der Dauer eines Halbbildes nur eine geringe Entladung bzw. Umladung durch die Steuerung der Verzögerungsanordnung auftritt.

Nach dem Einschalten des Video-Magnetbandgerätes auf Wiedergabe kann es durch den Anlaufvorgang geschehen, daß der Aussteuerungsbereich des Phasenvergleichers oder der Verzögerungsanordnung in der Nähe des einen Endwertes liegt, so daß bei kleinen Phasensprüngen beim Spurwechsel der Aussteuerungsbereich überschritten wird und dadurch ein Sprung des wiedergegebenen Bildes um eine Zeile erfolgt. Um dies zu vermeiden, ist eine weitere Ausgestaltung der Erfindung dadurch gekennzeichnet, daß an dem weiteren Kondensator eine Überwachungseinrichtung angeschlossen ist, die beim Überschreiten eines oberen Grenzwertes und beim Unterschreiten eines unteren Grenzwertes der Spannung am weiteren Kondensator, wobei die Differenz zwischen oberen und unterem Grenzwert einer Veränderung der Verzögerungszeit der Verzögerungsanordnung um mehr als den Abstand zweier Zeilentaktimpulse entspricht, seine Spannung auf einen Mittelwert einstellt. Auf diese Weise wird erreicht, daß die Steuersignale des Phasenvergleichers und der Verzögerungsanordnung immer etwa in der Mitte des Aussteuerungsbereichs liegen.

Ausführungsbeispiele der Erfindung werden nachstehend anhand der Zeichnung näher erläutert. Es zeigt

Fig. 1 das Zusammenwirken einiger mechanischer und elektronischer Teile eines Video-Magnetbandgerätes,

Fig. 2 die Anordnung der Spuren und der Informationen auf dem Magnetband,

Fig. 3 eine erfindungsgemäße Schaltungsanordnung mit einem Regelkreis aus einer Verzögerungsanordnung und einem Phasenvergleicher,

Fig. 4 ein mehr in Einzelheiten ausgeführtes Schaltbild der erfindungsgemäßen Anordnung nach Fig. 3,

Fig. 5 ein Diagramm mit den Spannungsverläufen an einigen Punkten der Schaltungsanordnung nach Fig. 4.

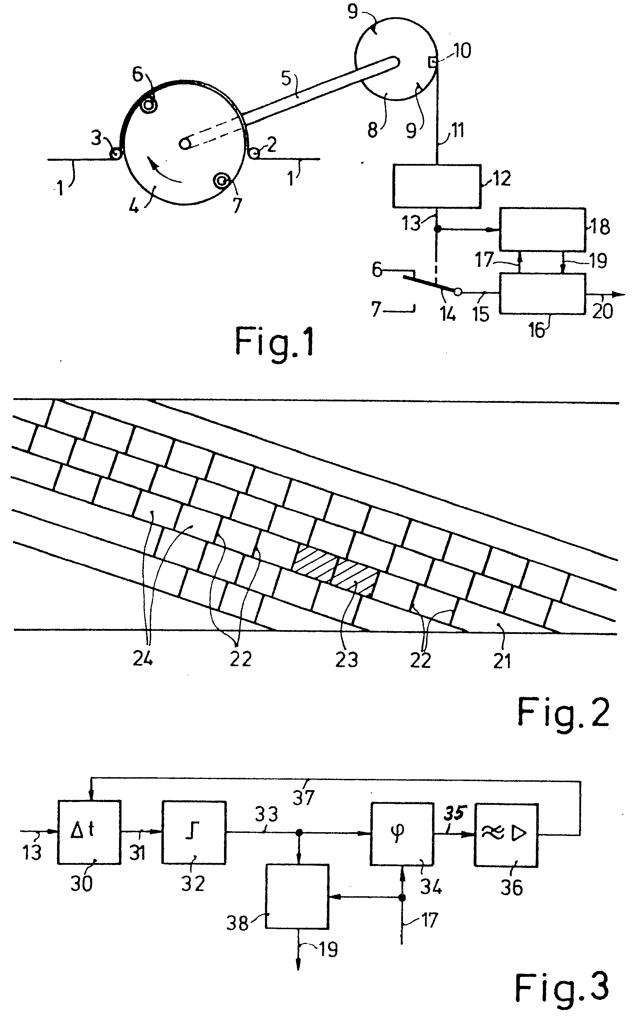

In Fig. 1 ist der Kopfträger 4 auf einer Welle 5 befestigt, mit der eine Markierungsscheibe 8 verbunden ist. Die Welle 5 wird durch eine nicht dargestellte Antriebsvorrichtung angetrieben, so daß Kopfträger 4 und Markierungsscheibe 8 in Pfeilrichtung rotieren. An dem Kopfträger 4 sind zwei Magnetköpfe 6 und 7 genau gegenüberliegend angebracht, und übereinstimmend mit den Magnetköpfen 6 und 7 enthält die Markierungsscheibe 8 zwei Markierungen 9, die von einem Sensor 10 abgetastet werden.

Ein Magnetband 1, das um zwei Umlenkrollen 2 und 3 geführt ist, umschlingt den Kopfträger 4 um mindestens 180° mit einem axialen Versatz auf dem Umfang, so daß bei Rotation des Kopfträgers 4 mit hoher Geschwindigkeit und relativ langsamer Transportgeschwindigkeit des Magnetbandes 1 die Magnetköpfe 6 und 7 schräg über das Magnetband verlaufende Spuren beschreiben bzw. abtasten, wie diese in Fig. 2 angedeutet sind.

Diese Spuren 21 schließen mit dem Rand des Magnetbandes 1 einen spitzen Winkel ein und verlaufen eng benachbart parallel zueinander. Jede Spur 21 enthält die Information eines Halbbildes und beginnt mit einer Anzahl Horizontal-Synchronisierinformationen 22, nach denen die Vertikal-Synchronisierinformation 23 folgt. Die letztere befindet sich in Fig. 2 tatsächlich noch sehr nahe am unteren Rand des Magnetbandes 1, da die Aufteilung der Spuren hier nicht maßstäblich gezeichnet ist. Tatsächlich dauert die Vertikal-Synchronisierinformation 23 auch z. B. fünfmal je eine Halbzeilendauer, wobei strenggenommen jeweils z. B. fünf vor- und nachlaufende Horizontal-Synchronisierinformationen mit jeweils dem halben Zeilenabstand hinzuzurechnen sind. Nach der Vertikal-Synhronisierinformation 23 und einigen darauffolgenden Leerzeilen folgt dann die Information 24 der aufeinanderfolgenden Zeilen des darzustellenden Bildes, die jeweils durch Horizontal-Synchronisierinformationen 22 unterbrochen sind. Jede Spur 21 enthält somit das vollständige FBAS-Signal eines Halbbildes.

Der Sensor 10 zur Abtastung der Markierungen 9 der Markierungsscheibe 8 ist so angeordnet, daß er jeweils eine Markierung abtastet, wenn jeweils einer der Magnetköpfe 6 oder 7 gerade beginnt, eine neue Spur auf dem Magnetband 1 abzutasten. Das Abtastsignal des Sensors 10 wird über die Leitung 11 einer Impulsformerstufe 12 zugeführt, die am Ausgang 13 ein Rechtecksignal erzeugt, das jeweils bei der Abtastung einer Markierung und damit beim Wechsel der Abtastung des Magnetbandes 1 von einer Spur auf die andere den Zustand wechselt. Dieses Rechtecksignal am Ausgang 13 wird daher hier als Spurwechselsignal bezeichnet. Da dieses Spurwechselsignal bei Verwendung mehrerer Magnetköpfe wie der zwei Magnetköpfe 6 und 7 im beschriebenen Beispiel deren Umschaltung steuert, wird es auch allgemein als Kopfwechselsignal bezeichnet. Es ist noch zu bemerken, daß die Bewegung des Kopfträgers von einem Quarzoszillator gesteuert wird, so daß ohne Verwendung der Markierungsscheibe 8 das Kopfwechselsignal direkt von diesem Quarzoszillator abgeleitet werden kann.

Die Signale der Magnetköpfe 6 und 7 werden beispielsweise über rotierende Übertrager den beiden Umschaltkontakten eines elektronischen Umschalters 14 zugeführt, der von dem Kopfwechselsignal auf der Leitung 13 gesteuert wird und jeweils denjenigen Magnetkopf, der sich gerade im Umschlingungsbereich des Magnetbandes 1 befindet, über die Leitung 15 mit einer Bildsignal-Verarbeitungsanordnung 16 verbindet. In dieser Anordnung 16 wird das von den Magnetköpfen 6 bzw. 7 abgetastete frequenzmodulierte Bildsignal demoduliert und verstärkt, so daß es die Form eines üblichen FBAS-Signals erhält, das über den Ausgang 20 der Anordnung 16 abgegeben und einem Fernsehgerät zur Wiedergabe der abgetasteten Bildinformation zugeführt wird. Da in jeder Spur auch die vollständige Synchronisierinformation sowohl für die Horizontalablenkung wie auch für die Vertikalablenkung enthalten ist, kann die abgetastete Bildinformation nach der beschriebenen Demodulation und Verstärkung unmittelbar ohne Hinzufügung von weiterer Information weitergeleitet werden. Die Anordnung 16 enthält noch einen nicht näher dargestellten Zeilentaktgenerator, der ein Zeilentaktsignal bzw. ein Halbzeilentaktsignal mit der doppelten Zeilenfrequenz erzeugt und von den von der Spur abgetasteten Horizontal-Synchronisierinformationen phasengeregelt wird und auch bei Ausfall der Information vom Magnetband relativ stabil weiterläuft.

Durch Fehler des Bandes oder des Gerätes verursacht, ist es möglich, daß die Bänder des Magnetbandes nicht gut an den abtastenden Magnetköpfen 6 und 7 anliegen und somit die Randbereiche, die die Vertikal-Synchronisierinformationen enthalten, nicht richtig abgetastet werden. Dadurch entsteht dann am Ausgang 20 der Bildsignal-Verarbeitungsanordnung 16 ein Signal, in dem die Vertikal-Synchronisierinformation fehlt, so daß das angeschlossene Fernsehgerät kein stehendes Bild liefern kann.

Es ist daher eine Anordnung 18 vorgesehen, die über die Leitung 13 das Kopfwechselsignal und über die Leitung 17 das vom Zeilentaktgenerator in der Anordnung 16 erzeugte Halbzeilentaktsignal erhält und daraus eine Vertikal-Synchronisierinformation bildet, die gleichzeitig mit der aufgezeichneten Vertikal-Synchronisierinformation auftritt, wenn diese sich auf dem Magnetband an der vorgeschriebenen Stelle befindet und auch richtig abgetastet wird. Diese in der Anordnung 18 extra erzeugte Vertikal-Synchronisierinformation wird über die Leitung 19 der Anordnung 16 zugeführt und ersetzt dort die gleichzeitig vom Magnetband abgetastete Information. Auf diese Weise wird also die vom Magnetband abgetastete Vertikal-Synchronnisierinformation nicht verwertet. Zweckmäßig wird nach einem Kopfwechsel, d. h. nach einem Wechsel des Zustandes des Spurwechselsignals in der Anordnung 16, die vom Magnetband gelesene Information gesperrt und die Horizontal-Synchronisierinformation durch das einfach untersetzte Halbzeilentaktsignal des Zeilentaktgenerators und die Vertikal-Synchronisierinformation durch die auf der Leitung 19 von der Anordnung 18 erzeugte Information ersetzt. Nach einer Zeitspanne, nach der auch innerhalb der vorausgesehenen Toleranzen keine Vertikal-Synchronisierinformation vom Magnetband mehr erscheinen kann, kann wieder auf das vom Magnetband abgetastete Signal umgeschaltet werden. Die Umschaltung kann auch unmittelbar nach dem Ende der in der Anordnung 18 erzeugten Vertikal-Synchronisierinformation erfolgen, wenn beispielsweise durch Impulsformung wie Differenzierer alle vom Magnetband abgetasteten Synchronisierinformationen, d. h. auch die evtl. später noch eintreffende Vertikal-Synchronisierinformation, in schmale Impulse entsprechend den Horizontal-Synchronisierimpulsen umgeformt werden. Die letztere Möglichkeit hat den Vorteil, daß dann die Horizontalablenkung im Fernsehgerät früher vor Beginn der Bildinformation von der Horizontal-Synchronisierinformation vom Magnetband synchronisiert werden kann, was insbesondere bei einem größeren Phasensprung der Horizontal-Syhnronisierinformation nach einem Spurwechsel von Bedeutung ist. In jedem Fall entsteht in dem Fall, daß durch einen der genannten Fehler die Vertikal-Synchronisierinformation vom Magnetband ausfällt, im wiedergegebenen Bild keine Änderung, insbesondere kein Bildsprung in vertikaler Richtung.

Die Vertikal-Synchronisierinformation besteht aus einer Anzahl Impulsen mit einer Dauer entsprechend dem wesentlichen Teil einer Halbzeilendauer, die im halben Abstand der Horizontal-Synchronisierinformation innerhalb der Bildinformation aufeinander folgen. Im einfachsten Falle könnte also die in der Anordnung 18 erzeugte Vertikal-Synchronisierinformation aus dem Zeilentaktsignal der Leitung 17 mit Hilfe eines Zählers erzeugt werden, der durch das Kopfwechselsignal auf der Leitung 13 gestartet wird und eine vorgegebene Anzahl von Halbzeilentaktimpulsen abzählt, bevor er eine weitere Anzahl Vertikal-Synchronisierimpulse erzeugt. Dabei ist jedoch zu berücksichtigen, daß die Phasenlage des Kopfwechselsignals zu den Horizontal-Synchronisierimpulsen auf dem Magnetband mit einer Toleranz behaftet ist und außerdem beim Kopfwechsel um bis zu 16 µs, d. h. um eine viertel Zeile, nach beiden Seiten springen kann. Bei zufällig ungünstiger Phasenlage des Kopfwechselsignals zu dem Halbzeilentaktsignal kann somit der Zähler, der eine Anzahl Halbzeilentaktimpulse abzählt, bevor die Vertikal-Synchronisierinformation erzeugt wird, von einem Halbbild zum nächsten eine um eine Halbzeile gegenüber der Bildinformation verschobene Vertikal-Synchronisierinformation liefern. Da dieser wenn auch nur geringe horizontale Bildsprung noch stören kann, wird die Verzögerung vom Beginn des Kopfwechselsignals bis zum Beginn der Erzeugung der Vertikal-Synchronisierinformation so geregelt, daß diese Verzögerung etwa in die Mitte zwischen zwei Halbzeilentaktsignale fällt, so daß beim Kopfwechsel kein Sprung des Bildes um eine Halbzeile auftreten kann.

Dies wird durch einen Aufbau der Anordnung 18 gemäß Fig. 3 erricht. Darin erhält eine Verzögerungsanordnung 30 das Kopfwechselsignal über die Leitung 13 und gibt dieses Signal bzw. dessen Flanken verzögert am Ausgang 31 ab. Die Verzögerungsdauer, um die die Flanke des Kopfwechselsignals in der Verzögerungsanordnung 30 verzögert wird, ist durch ein Signal über die Leitung 37 steuerbar.

Das verzögerte Signal auf der Leitung 31 wird einem Pulsformer 32 zugeführt, der daraus ein kurzes Rechtecksignal auf der Leitung 33 erzeugt, die mit dem Starteingang eines Vertikal-Synchronisier-Generators 38 verbunden ist. Dieser Generator 38 erhält ferner das Halbzeilentaktsignal über die Leitung 17. Mit dem nächsten Halbzeilentaktimpuls bzw. dessen nächster Flanke nach dem Auftreten eines Startsignals auf der Leitung 33 beginnt der Generator 38, die Vertikal-Synchronisierinformation in der vorgeschriebenen Form synchron mit dem Halbzeilentaktsignal zu erzeugen. Da das Halbzeilentaktsignal auf der Leitung 17, wie erwähnt, die doppelte Zeilenfrequenz hat und die Vertikal-Synchronisierinformation mehrere Impulse mit einem Abstand gleich der halben Zeilendauer hat, kann der Generator 38 am einfachsten Zähler enthalten, die durch das Startsignal auf der Leitung 33 gestartet und durch das über die Leitung 17 zugeführte Halbzeilentaktsignal weitergeschaltet werden. Von den einzelnen Zählerstellungen werden dann die Vertikal-Synchronisierimpulse abgeleitet und über den Ausgang 19 herausgeführt. Nach der vollständigen Erzeugung der Vertikal-Synchronisierinformation gehen die Zähler in dem Generator 38 in ihre Ruhestellung zurück und verbleiben in diesem Zustand, bis das nächste Startsignal erscheint. Der genaue Aufbau des Vertikal-Synchronisier-Generators 38 ist für den Fachmann geläufig und wird daher hier nicht näher erläutert.

Das vom Pulsformer 32 auf der Leitung 33 erzeugte Startsignal wird ferner einem Phasenvergleicher 34 zugeführt, der dieses Startsignal mit dem Halbzeilentaktsignal auf der Leitung 17 vergleicht. Am Ausgang des Phasenvergleichers 34 erscheint auf der Leitung 35 ein der Phasendifferenz zwischen Startsignal auf der Leitung 33 und Halbzeilentaktsignal entsprechendes Ausgangssignal, das einer Anordnung 36 zugeführt wird, die einen Tiefpaß und einen Verstärker enthält. Auf der Leitung 37 erscheint dann ein sich nur langsam änderndes Signal, das den Mittelwert der Phasenabweichungen zwischen Startsignal und Halbzeilentaktsignal einer Anzahl vorhergehender Perioden angibt und die Verzögerungszeit der Verzögerungsanordnung 30 so steuert, daß diese Phasendifferenz sich auf einen vorgegebenen Wert einstellt. Dieser vorgegebene Wert ist die Mitte eines Zeilentaktimpulses und hat einen genügend sicheren Abstand von den Flanken der Zeilentaktsignale, die im Vertikal-Synchronisier-Generator 38 die Zähler weiterschalten. Dadurch wird der Vertikal-Synchronisier-Generator immer unmittelbar vor dem gleichen Halbzeilentaktsignal nach einem Kopfwechsel gestartet, so daß kein vertikaler Bildsprung beim Spurwechsel entsteht.

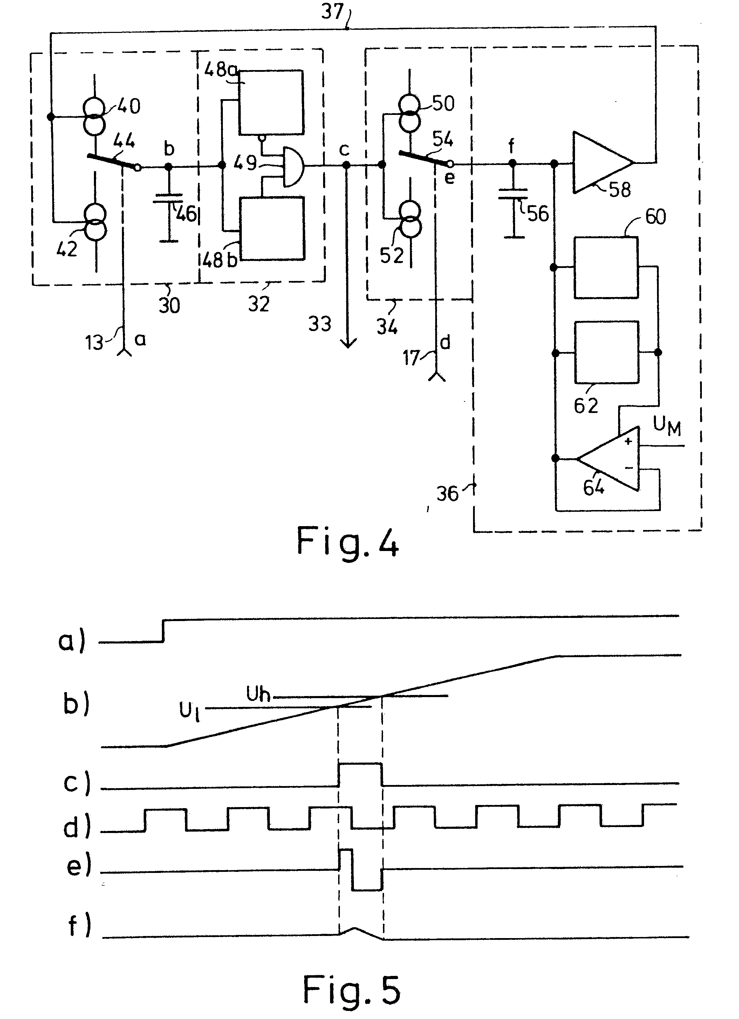

In Fig. 4 ist die Anordnung nach Fig. 3 mehr in Einzelheiten dargestellt. Die Verzögerungsanordnung 30 enthält darin zwei Stromgeneratoren 40 und 42, die zueinander entgegengesetzt gerichtete, gleich große Ströme erzeugen. Der Betrag dieser beiden Ströme wird durch ein Signal über die Leitung 37 gleichsinnig gesteuert, d. h. beide Ströme werden bei einer Änderung des Signals auf der Leitung 37 um den gleichen Betrag größer oder kleiner.

Die Ausgänge der beiden Stromgeneratoren 40 und 42 sind meinem Umschalter 44 verbunden, der von dem Kopfwechselsignal auf der Leitung 13 gesteuert wird. Während des einen Signalzustandes des Kopfwechselsignals, d. h. während der eine der beiden Magnetköpfe das Magnetband abtastet, befindet sich beispielsweise der Umschalter 44 in der dargestellten Lage, so daß der an den Umschalter angeschlossene Kondensator 46 von einem Anfangswert ausgeht aufgeladen wird. Diese Aufladung erstreckt sich im Normalfall vorzugsweise über eine Zeitdauer, die der von 16 Bildzeilen entspricht. Danach ist die Spannung am Kondensator 46 und damit am Ausgang des Stromgenerators 40 so groß, daß letzterer gesättigt ist und kein Strom mehr fließt. Der Stromgenerator 40 bildet also den Ladestromgenerator. Wenn danach das Kopfwechselsignal auf der Leitung 13 seinen Wert wechselt, wird der Umschalter 44 in die untere Lage umgeschaltet und der Kondensator 46 über den Entladestromgenerator 42 entladen, bis die Spannung so niedrig geworden ist, daß der Stromgenerator 42 gesättigt wird und kein Strom mehr fließt. Dieser Spannungswert ist der Anfangswert, von dem die Aufladung des Kondensators 46 wieder ausgeht.

Diese nach jedem Kopfwechsel ansteigende bzw. abfallende Spannung am Kondensator 46 wird der Pulsformerstufe 32 zugeführt, die zwei Vergleicher bzw. Schwellwertschalter 48a und 48b enthält, die mit etwas unterschiedlichen Schwellwerten schalten. Beide Schwellwerte liegen in der Mitte des Bereiches der Spannungen, die am Kondensator 46 auftreten können. Wenn angenommen wird, daß der Schalter 48b mit dem niedrigeren Schwellwert schaltet und die Spannung am Kondensator 46 ansteigt, so gibt der Schalter 48b am Ausgang ein Signal an den einen Ausgang des UND-Gliedes 49 ab, wenn die Spannung am Kondensator 46 diesen unteren Schwellwert überschreitet. Durch die Invertierung am Ausgang des Schalters 48a erhält der andere Eingang des UND-Gliedes 49 ebenfalls ein Signal, so daß ein Ausgangssignal, daß das Startsignal darstellt, auf der Leitung 33 erzeugt wird. Wenn die Spannung am Kondensator 46 dann weiter steigt, wird auch der obere Schwellwert des Schalters 48 überschritten, und das UND-Glied 49 wird wieder gesperrt und damit das Startsignal auf der Leitung 33 beendet.

Der zeitliche Ablauf dieser Vorgänge ist in Fig. 5 näher dargestellt. Darin ist eine Zeile a das Kopfwechselsignal dargestellt, das einen Übergang von Niedrig nach Hoch aufweist. Bei diesem Übergang beginnt die Aufladung des Kondensators 46, dessen Spannung in der Zeile b dargestellt ist. Sobald diese Kondensatorspannung den unteren Schwellwert $U_l$ überschreitet, nimmt das in Zeile c dargestellte Startsignal einen hohen Wert an. Sobald danach die Spannung am Kondensator 46 den oberen Schwellwert $U_h$ überschreitet, wird das Startsignal wieder beendet. Die Aufladung des Kondensators 46 geht dann noch weiter, bis ein oberer Grenzwert erreicht ist. Es ist klar, daß die gleichen Vorgänge bei der Entladung in umgekehrter Reihenfolge auftreten, so daß ebenfalls ein Startsignal gleicher Form erzeugt wird, das vom Beginn des Signalübergangs im Spurwechselsignal von Hoch nach Niedrig den gleichen Abstand hat, wenn die beiden Schwellwerte $U_l$ und $U_h$ genau symmetrisch zur unteren und oberen Spannung am Kondensator 46 nach vollständiger Auf- bzw. Entladung liegen.

Das Startsignal auf der Leitung 33 in Fig. 4 wird dem Vertikal-Synchronisier-Generator 38 in Fig. 3 zugeführt, der hier nicht nochmals dargestellt ist, sowie dem Phasenvergleicher 34. Dieser erhält zwei Stromquellen 50 und 52 mit zueinander entgegengesetzt gerichteter Stromrichtung, die durch das Startsignal eingeschaltet werden. Die Ausgänge der beiden Stromgeneratoren führen auf einen Umschalter 54, der von dem Halbzeilentaktsignal auf der Leitung 17 betätigt wird. Dieser Umschalter 54 führt in dem Tiefpaß und Verstärker 36 auf einen Kondensator 56 mit relativ großer Kapazität.

Der zeitliche Ablauf der Vorgänge im Phasenvergleicher und im Tiefpaß ist ebenfalls in Fig. 5 dargestellt. Die Zeile d zeigt das Halbzeilentaktsignal auf der Leitung 17, das hier nicht zeitlich maßstabsgerecht dargestellt ist, da zwischen dem Zustandswechsel des Kopfwechselsignals in der Zeile a und dem Startsignal c tatsächlich die Dauer von 16 Halbzeilentaktsignalen mit der doppelten Zeilenfrequenz des darzustellenden Bildes liegt. Wenn das Halbzeilentaktsignal hoch ist, möge der Schalter 54 auch in der oberen Stellung liegen, und umgekehrt. Dadurch fließt am Ausgang des Umschalters 54 ein Strom, der in der Zeile e dargestellt ist und von einem positiven Wert entsprechend dem Strom der Stromquelle 50 beim Wechsel des Zustandes des Zeilentaktsignals auf einen negativen Wert entsprechend dem Strom der Stromquelle 52 umspringt. Dabei wird angenommen, daß die Beträge der Ströme der Stromquellen 50 und 52 im wesentlichen gleich sind. Die Zeitdauern des positiven und negativen Stroms sind hier allerdings, bedingt durch die dargestellte Phasenlage zwischen Halbzeilentaktsignal und Startsignal, nicht gleich.

Die Spannung am Kondensator 56 ist in der Zeile f dargestellt und steigt während des positiven Stroms an, fällt aber durch die längere Zeitdauer des negativen Stroms am Ausgang des Umschalters 54 unter den vorherigen Wert ab. Die Spannung am Kondensator 56 wird in Fig. 4 über den Verstärker 58 und über die Leitung 37 den Lade- und Entladestromgeneratoren 40 und 42 zugeführt und erhöht dort den Strom, so daß nach dem nächsten Zustandswechsel des Kopfwechselsignals die Umladung des Kondensators 46 schneller erfolgt und somit das Startsignal früher erscheint, so daß dann die beiden in der Zeile e der Fig. 5 dargestellten Stromanteile etwa gleich sind. Es ist klar, daß bei einem zu früh auftretenden Startsignal die gleichen Vorgänge mit umgekehrtem Vorzeichen ablaufen, d. h. die Spannung an dem den Tiefpaß bildenden Kondensator 56 wird erhöht und dadurch die Ströme der Stromgeneratoren 40 und 42 verringert, so daß anschließend die Umladung des Kondensators 46 langsamer erfolgt und das Startsignal mehr gegenüber dem Zustandswechsel des Kopfwechselsignals verzögert wird. Auf diese Weise stellt sich stets eine Phasenlage ein, bei der das Startsignal, dessen Dauer mit etwa der halben Periode des Halbzeilentaktsignals (doppelte Zeilenfrequenz), d. h. mit einer Dauer von z. B. etwa 16 μs angenommen wird, symmetrisch zu der negativen Flanke des Zeilentaktsignals bzw. die Vorderflanke des Startsignals in der Mitte zwischen zwei Flanken des symmetrischen Halbzeilentaktsignals liegt.

Um diesen Zustand erreichen zu können, muß der maximal mögliche Spannungshub am Kondensator 56 das Startsignal um mindestens eine Periode des Halbzeilentaktsignals verschieben können. Dies gilt aber nur, wenn im eingeregelten Zustand die Spannung am Kondensator 56 in der Mitte dieser beiden Grenzwerte liegt. Beim Einlaufen in den eingeregelten Zustand nach dem Einschalten des Gerätes kann es aber passieren, daß im eingeregelten Zustand die Spannung am Kondensator 56 nahe der oberen oder der unteren Aussteuergrenze liegt, so daß dann nach jeweils einer Seite keine ausreichende Regelmöglichkeit mehr besteht und die Regelung aus dem Fangbereich läuft, wodurch im wiedergegebenen Bild ein vertikaler Bildsprung um eine Halbzeile auftreten kann. Um dies zu verhindern, ist erstens der Verstärker 58 so dimensioniert, daß der maximale Spannungshub am Kondensator 56 eine Verschiebung des Startsignals um mehr als eine Periodendauer des Halbzeilentaktsignals bewirkt, und zweitens ist eine aus den Schwellwertschaltern 60 und 62 sowie einem Verstärker 64 bestehende Anordnung vorgesehen, die das Signal am Kondensator 56 immer in den Bereich zwischen den beiden möglichen Grenzwerten zurückbringt.

Der Schwellwertschalter 60 vergleicht beispielsweise die Spannung am Kondensator 56 mit einem Schwellwert, der in der Nähe der oberen Grenze dieser Kondensatorspannung liegt, und gibt ein Signal ab, wenn dieser Schwellwert überschritten wird. Entsprechend vergleicht der Schwellwertschalter 62 die Spannung am Kondensator 56 mit einem unteren Schwellwert in der Nähe des unteren Grenzwertes und gibt ein Signal ab, wenn dieser untere Schwellwert unterschritten wird. In beiden Fällen wird ein Verstärker 64 eingeschaltet, der die Spannung am Kondensator 56 auf einen Mittelwert $U_m$ einstellt. Das Abschalten des Verstärkers 64 kann beispielsweise dadurch erfolgen, daß beide Schwellwertschalter 60 und 62 eine entsprechende Hysterese haben. Durch das Rückstellen der Spannung am Kondensator 56 über den Verstärker 64 entsteht zwar ein einmaliger vertikaler Bildsprung, jedoch tritt dieser unmittelbar nach dem Einschalten auf, wo er kaum bemerkt wird. Anschließend geht der weitere Regelvorgang dann jedoch von diesem mittleren Wert aus, so daß dann keine Gefahr mehr besteht, daß während des Regelvorganges ein Grenzwert erreicht wird. Auf diese Weise wird sicher vermieden, daß im normalen Betrieb ein vertikaler Bildsprung auftritt.

**Patentansprüche**

1. Schaltungsanordnung zum Erzeugen der Vertikal-Synchronisierinformation in einem Video-Magnetbandgerät, bei dem das Magnetband (1) einen rotierenden Kopfträger (4) mindestens teilweise umschlingt und der Kopfträger (4) einen oder mehrere gleichmäßig auf dem Umfang des Kopfträgers verteilte Magnetköpfe (6, 7) aufweist, die auf dem Magnetband (1) nacheinander benachbarte, schräg zur Richtung des Magnetbandes verlaufende Spuren (21) beschreiben bzw. abtasten, die jeweils die Information eines Halbbildes und in einem vorgegebenen geringen Abstand vom Rand des Magnetbandes (1) die Vertikal-Synchronisierinformation (23) enthalten, wobei von der Bewegung des Kopfträgers (4) ein den Spurwechsel angebendes Spurwechselsignal abgeleitet ist und ferner ein von Horizontal-Synchronisierimpulsen der Bildinformation synchronisierter Zeilentaktgenerator zur Erzeugung eines Zeilentaktsignals vorgesehen ist, dadurch gekennzeichnet, daß eine Verzögerungsanordnung (30) aus dem verzögerten Spurwechselsignal ein Startsignal erzeugt, das einen Vertikal-Synchronisier-Generator (38) zur Erzeugung der Vertikal-Synchronisierinformation für die Bildsignal-Verarbeitung aus dem Zeilentaktsignal startet, und daß ein Phasenvergleicher (34) die Verzögerungszeit der Verzögerungseinrichtung (30) so steuert, daß das Startsignal mit einem vorgegebenen Phasenbereich eines der Zeilentakte zusammenfällt, der zwischen dem in dem Vertikal-Synchronisier-Generator (38) aktiven Bereich des Zeilentaktsignals liegt.

2. Schaltungsanordnung nach Anspruch 1, dadurch gekennzeichnet, daß die Verzögerungsanordnung (30) einen Lade- und Entladestromgenerator (40, 42) mit vom Phasenvergleicher (34) gesteuerten Stromwert und einen daran über einen vom Spurwechselsignal gesteuerten Umschalter (44) angeschlossenen Kondensator (46) enthält, der mit dem Eingang eines Schwellwertschalters (48) mit fester Schwelle verbunden ist, der das Startsignal erzeugt.

3. Schaltungsanordnung nach Anspruch 2, dadurch gekennzeichnet, daß der Schwellwertschalter (48) zwei Schwellwerte ($U_h$, $U_l$) aufweist und ein Ausgangssignal mit einem ersten Wert abgibt, wenn die Spannung am Kondensator (46) den ersten Schwellwert überschreitet, und ein Ausgangssignal mit einem zweiten Wert abgibt, wenn die Spannung am Kondensator (46) den ersten Schwellwert noch nicht oder den zweiten Schwellwert überschritten hat, wobei die Schwellwerte so gewählt sind, daß die Dauer des Ausgangssignals mit dem ersten Wert, das das Startsignal darstellt, kleiner als die Dauer eines Zeilentaktes ist.

4. Schaltungsanordnung nach Anspruch 1 oder einem der folgenden, dadurch gekennzeichnet, daß der Phasenvergleicher (34) die Phase des erzeugten Startsignals und des Zeilentaktsignals vergleicht.

5. Schaltungsanordnung nach Anspruch 1 oder einem der folgenden, dadurch gekennzeichnet, daß der Phasenvergleicher (34) zwei schaltbare Stromquellen (50, 52) mit zueinander entgegengesetzer Polarität enthält, die während der Dauer des Startsignals eingeschaltet sind, daß ein weiterer Kondensator (56) über einen weiteren Umschalter (54) wahlweise mit der Stromquelle (50, 52) der einen oder der anderen Polarität verbunden ist, daß das Zeilentaktsignal den weiteren Umschalter (54) steuert, und daß die Spannung am weiteren Kondensator (56) die Verzögerungszeit der Verzögerungsanordnung (30) steuert.

6. Schaltungsanordnung nach Anspruch 5, dadurch gekennzeichnet, daß an dem weiteren Kondensator (56) eine Überwachungseinrichtung (60, 62, 64) angeschlossen ist, die beim Überschreiten eines oberen Grenzwertes und beim Unterschreiten eines unteren Grenzwertes der Spannung am weiteren Kondensator (56), wobei die Differenz zwischen oberem und unterem Grenzwert eine Veränderung der Verzögerungszeit der Verzögerungsanordnung (30) um mehr als den Abstand zweier Zeilentaktimpulse entspricht, seine Spannung auf einen Mittelwert einstellt.

## Claims

1. A circuit arrangement for generating the vertical synchronizing information in a magnetic video-tape apparatus in which the magnetic tape (1) is at least partly wrapped around a rotating head-support (4) and the head support (4) carries one or more magnetic heads (6, 7) which are uniformly spaced over the circumference of the head support, which magnetic heads consecutively write or scan adjacent tracks on the magnetic tape (1), which tracks are inclined relative to the longitudinal axis of the magnetic tape and each contain the information of one field and at a predetermined small distance from the edge of the magnetic tape (1) contain the vertical synchronizing information (23), a track-change signal being generated, which signal is synchronized with the head-support rotation and indicates a track change, and which apparatus further comprises a line pulse generator for generating a line-pulse signal, which generator is synchronized by the horizontal synchronizing pulses in the video information, characterized in that a delay means (30) derives a starting signal from the delayed track-change signal, which starting signal starts a vertical synchronizing generator (38) for deriving the vertical synchronizing information for the video signal processing circuit from the line-pulse signal, and a phase comparator (34) controls the delay time of the delay means (30) in such a way that the starting signal coincides with a specific phase range of one of the line pulses, which range is situated between two ranges of the line-pulse signal in which the vertical-synchronizing generator (38) is active.

2. A circuit arrangement as claimed in claim 1, characterized in that the delay means (30) comprises a charging and discharging current generator (40, 42), whose current value is controlled by the phase comparator (34), and a capacitor (46) which is connected to said generator via a switch (44) which is controlled by the track-change signal, which capacitor is also connected to the input of a threshold switch (48) having a fixed thershold, which thershold switch supplies the starting signal.

3. A circuit arrangement as claimed in claim 2, characterized in that the threshold switch (48) has two thershold values ($U_h$, $Z_l$) and supplies an output signal of a first value when the voltage across the capacitor (46) exceeds the first threshold value and supplies an output signal of a second value when the voltage across the capacitor (46) has not yet exceeded the first threshold value but has exceeded the second threshold value, the threshold values being selected so that the duration of the output signal of the first value, which output signal forms the starting signal, is smaller than the duration of one line pulse.

4. A circuit arrangement as claimed in any one of claims 1 to 3, characterized in that the phase comparator (34) compares the phase of the generated starting signal and that of the line-pulse signal.

5. A circuit arrangement as claimed in any one of claims 1 to 4, characterized in that the phase comparator (34) comprises two switchable current sources (50, 52) of opposite polarity, which sources are operative during the starting signal, a further capacitor (56) is connectable to the current source (50, 52) of the one or the other polarity via a further switch (54), the line-pulse signal controls the further switch (54), and the voltage across the further capacitor (56) controls the delay time of the delay means (30).

6. A circuit arrangement as claimed in claim 5, characterized in that a detection device (60, 62, 64) is connected to the further capacitor (56), which device sets the voltage across the further capacitor (56) to an average value when the voltage across the further capacitor (56) exceeds an upper limit value and when said voltage decreases below a lower limit value, the difference between the upper and the lower limit value corresponding to a variation of the delay time of the delay means (30) by more than the interval between two line pulses.

## Revendications

1. Circuit de génération de l'information de synchronisation verticale dans un magnétoscope dans lequel la bande magnétique (1) est au moins partiellement bouclée sur un porte-tête rotatif (4) et le porte-tête présente une ou plusieurs têtes magnétiques (6, 7) uniformément réparties sur son pourtour, têtes magnétiques qui sur la bande magnétique, enregistrent ou explorent successivement des pistes contiguës (21) s'étendant obliquement à l'axe longitudinal de la bande magnétique, pistes qui comportent chacune l'information d'une trame ainsi que, à une faible distance prédéterminée du bord de la bande magnétique (1), l'information de synchronisation verticale (23), alors qu'il est engendré un signal de changement de piste synchronisé avec le mouvement du porte-tête (4) et indiquant un changement de piste et qu'il est prévu en outre un générateur de rythme de ligne synchronisé par des impulsions de synchronisation horizontale de l'information d'image et servant à engendrer un signal de rythme de ligne, caractérisé en ce qu'un circuit à retard (30) déduit du signal retardé de changement de piste un signal de démarrage démarrant un générateur de synchronisation verticale (38) servant à déduire du signal de rythme de ligne de l'information de synchronisation verticale pour le traitement du signal d'image et en ce qu'un comparateur de phase (34) commande le retard du dispositif à retard (30) de façon que le signal de démarrage coïncide avec un domaine de phase prédéterminé de l'une des impulsions de rythme de ligne, domaine qui est situé entre deux domaines du signal de rythme de ligne dans lesquels le générateur de synchronisation verticale (38) est actif.

2. Circuit selon la revendication 1, caractérisé en ce que le circuit à retard (30) comporte, d'une part, des générateurs (40, 42) de courants de charge et de décharge dont la valeur de courant est commandée par le comparateur de phase (34) et, d'autre part, un condensateur (46) raccordé audit générateur à travers un commutateur (44) commandé par le signal de changement de piste, condensateur qui est relié à l'entrée d'un commutateur de seuil (48) ayant un seuil fixe et fournissant le signal de démarrage.

3. Circuit selon la revendication 2, caractérisé en ce que le commutateur de seuil (48) présente deux valeurs de seuil ($U_l$, $U_h$) et délivre un signal de sortie d'une première valeur lorsque la tension aux bornes du condensateur (46) dépasse la première valeur de seuil et un signal de sortie d'une seconde valeur lorsque la tension aux bornes du condensateur (46), sans avoir déjà passé la première valeur de seuil, a dépassé la seconde valeur de seuil, les valeurs de seuil étant choisies de façon que la durée du signal de sortie ayant la première valeur et constituant le signal de démarrage soit inférieure à la durée d'une impulsion de rythme de ligne.

4. Circuit selon l'une quelconque des revendications 1 à 3, caractérisé en ce que le comparateur de phase (34) compare les phases du signal de démarrage engendré et du signal de rythme de ligne.

5. Circuit selon l'une qualconque des revendications 1 à 4, caractérisé en ce que le comparateur de phase (34) comporte deux sources de courant commutables (50, 52) de polarités opposées, sources que sont actives pendant la durée du signal de démarrage, en ce qu'à travers un autre commutateur (54), un autre condensateur (56) est relié au choix à la source de courant (50, 52) de l'une ou de l'autre polarité, en ce que le signal de rythme de ligne commande l'autre commutateur (54) et en ce que la tension aux bornes de l'autre condensateur (56) commande la retard du circuit à retard (30).

6. Circuit selon la revendication 5, caractérisé en ce qu'un dispositif de détection (60, 62, 64) est raccordé à l'autre condensateur (56), dispositif qui règle la tension aux bornes de l'autre condensateur (56) à une valeur moyenne lorsque la tension aux bornes de ce condensateur dépasse une valeur limite supérieure ou diminue au-dessous d'une valeur limite inférieure, la différence entre les valeurs limite supérieure et inférieure correspondant à une variation du retard du circuit à retard (30) supérieure à l'intervalle entre deux impulsions de rythme de ligne.

Fig.1

Fig.2

Fig.3

0 078 081

Fig. 4

Fig. 5

13